# EUROPÄISCHE PATENTANMELDUNG

(11) **EP 4 293 269 A1**
(43) Veröffentlichungstag der Anmeldung: **20.12.2023**
(21) Anmeldenummer: 23171117.7
(22) Anmeldetag: 02.05.2023
(51) Int. Cl.: F16L 41/03, F16L 55/027

(54) **FLUIDVERTEILUNGSSYSTEM UND VERFAHREN ZUM HERSTELLEN EINES FLUIDVERTEILUNGSSYSTEMS**

(30) Priorität: 13.06.2022 DE 102022114845
(71) Anmelder: Witzenmann GmbH, 75175 Pforzheim (DE)
(72) Erfinder: Ehrenberger, David, 75203 Königsbach-Stein (DE)
(74) Vertreter: LBP Lemcke, Brommer & Partner Patentanwälte mbB

(57) **Zusammenfassung**

Vorgeschlagen wird ein Fluidverteilungssystem (1) mit einer Hauptverteilungsleitung (2) und einer Anzahl von Abzweigungsleitungen (7), welche Abzweigungsleitungen (7) jeweils von der Hauptleitung (2) abgezweigt sind, bei dem in wenigstens einer Abzweigungsleitung (7) eine Drosseleinrichtung (8) angeordnet ist, welches Fluidverteilungssystem (1) sich dadurch auszeichnet, dass die Drosseleinrichtung (8) durch mindestens eine lokale Verformung der betreffenden Abzweigungsleitung (7) ausgebildet ist. Ebenfalls vorgeschlagen wird ein Verfahren zur Herstellung eines solchen Fluidverteilungssystems (1).

## Beschreibung

Die Erfindung betrifft ein Fluidverteilungssystem mit einer Hauptverteilungsleitung und einer Anzahl von Abzweigungsleitungen, welche Abzweigungsleitungen jeweils von der Hauptleitung abgezweigt sind, bei dem in wenigstens einer Abzweigungsleitung eine Drosseleinrichtung angeordnet ist, gemäß dem Oberbegriff des Anspruchs 1.

Die Erfindung betrifft weiterhin ein Verfahren zur Herstellung eines Fluidverteilungssystems aus einer Hauptverteilungsleitung und einer Anzahl von Abzweigungsleitungen, welche Abzweigungsleitungen jeweils von der Hauptleitung abzweigen, insbesondere des erfindungsgemäßen Fluidverteilungssystems, gemäß dem Oberbegriff des Anspruchs 11.

In vorbekannten Fluidverteilungssystemen, beispielsweise in Kühlkreisläufen mit mehreren Orten zur Entwärmung von Bauteilen oder Komponenten, werden Drosseleinrichtungen oder Drosseln in Form von separaten, individualisierten Teilen realisiert, welche Teile entsprechend projektiert, verbaut und anschließend geprüft werden müssen. Derartige Drosseln sind erforderlich, um einen Fluss von Fluid, beispielsweise einer Kühlflüssigkeit, in dem Fluidverteilungssystem zu den genannten Bauteilen oder Komponenten in geeigneter Weise zu steuern.

Die Individualisierung der Einzelteile verhindert eine an sich erstrebenswerte Gleichteilverwendung und erhöht so die Kosten für die Herstellung der Fluidverteilungssystem durch geringe Stückzahlen sowie die Komplexität bei der Montage.

Der Erfindung liegt die Aufgabe zugrunde, eine Drosselfunktion in den Abzweigen bzw. Abzweigungsleitungen eines Fluidverteilungssystems bereitzustellen, wobei durch Verwendung von Gleichteilen in Projektierung, Beschaffung und Montage eine Vereinfachung der Herstellung und ein entsprechender Kostenvorteil erreicht werden sollen.

Die Aufgabe wird erfindungsgemäß gelöst durch ein Fluidverteilungssystem mit den Merkmalen des Anspruchs 1 sowie durch ein Verfahren zur Herstellung eines Fluidverteilungssystems mit den Merkmalen des Anspruchs 11.

Vorteilhafte Weiterbildungen der Erfindung sind in den jeweiligen Unteransprüchen definiert.

Erfindungsgemäß ist ein Fluidverteilungssystem mit einer Hauptverteilungsleitung und einer Anzahl von Abzweigungsleitungen, welche Abzweigungsleitungen jeweils von der Hauptleitung abgezweigt sind, bei dem in wenigstens einer Abzweigungsleitung eine Drosseleinrichtung angeordnet ist, dadurch gekennzeichnet, dass die Drosseleinrichtung durch mindestens eine lokale Verformung der betreffenden Abzweigungsleitung ausgebildet ist.

Erfindungsgemäß ist ein Verfahren zur Herstellung eines Fluidverteilungssystems aus einer Hauptverteilungsleitung und einer Anzahl von Abzweigungsleitungen, welche Abzweigungsleitungen jeweils von der Hauptleitung abzweigen, insbesondere des erfindungsgemäßen Fluidverteilungssystems, dadurch gekennzeichnet, dass in wenigstens einer Abzweigungsleitung eine Drosseleinrichtung durch mindestens ein lokales Verformen der betreffenden Abzweigungsleitung ausgebildet wird.

Es wird demnach im Rahmen der vorliegenden Erfindung vorgeschlagen, eine Drosselfunktion bei einem Fluidverteilungssystem, welches Fluidverteilungssystem im Wesentlichen aus einer sogenannten Mainpipe (MP) oder Hauptverteilungsleitung und an die Mainpipe angeschlossenen Droplines, d.h. Abzweigungsleitungen gebildet ist, dadurch bereitzustellen, dass die genannte Drossel oder Drosseleinrichtung durch lokale Verformung, insbesondere durch mechanische Einwirkung auf die jeweilige Dropline (DL), individuell realisiert wird.

Es ist auf diese Weise insbesondere möglich, das Fluidverteilungssystem unter Verwendung von identischen Droplines (Abzweigungsleitungen) zu fertigen und bei Bedarf eine jeweilige Drossel im Anschluss an die Fertigung des eigentlichen Fluidverteilungssystems je nach gewünschter Anforderung auszubilden.

Hierbei kann die Drossel oder Drosseleinrichtung in einer jeweiligen Abzweigungsleitung an einer entsprechenden Position entlang der Hauptverteilungsleitung eine individuelle Ausprägung erfahren, beispielsweise durch Variation der jeweiligen Eindrücktiefe und -Länge, insbesondere im Rahmen der beispielhaft genannten mechanischen Einwirkung.

Die Begriffe "Drossel" und "Drosseleinrichtung" werden hier und im Folgenden als Synonyme gebraucht.

Die genannte individuelle Ausprägung der Drosseleinrichtung(en) spiegelt vorzugsweise einen für die Gleichverteilung eines Massenstroms in dem Fluidverteilungssystem relevanten Druckverlust an bzw. in der betreffenden Drosseleinrichtung wider.

Die bereits erwähnte bevorzugte mechanische Einwirkung zur Erzeugung der lokalen Verformung kann durch das Eindrücken eines oder mehrerer vorzugsweise symmetrisch über den Umfang der betreffenden Abzweigungsleitung angeordneten oder anordbaren Werkzeug- bzw. Stempelgeometrien ausgeführt werden, sodass sich ein vorzugsweise sternförmiger Rohrquerschnitt der Abzweigungsleitung ergibt.

Die genannte Sternform des Rohrquerschnitts weist vorzugsweise mehr als zwei Spitzen auf, höchst vorzugsweise drei oder vier Spitzen. Ein Vorteil der Sterngeometrie ist die Reduktion des hydraulischen Durchmessers für den benötigten Druckverlust bei gleichzeitig möglichst guter Erhaltung des Flächenträgheitsmoments und damit der Steifigkeit der Gesamtkonstruktion.

Folgende Ausgestaltungen der erfindungsgemäßen Vorrichtung bzw. des erfindungsgemäßen Verfahrens sind in den Unteransprüchen aufgeführt und haben sich als besonders vorteilhaft erwiesen:

Wie bereits ausgeführt wurde, kann in Weiterbildung des erfindungsgemäßen Fluidverteilungssystems vorgesehen sein, dass die Verformung, d.h. die lokale Verformung zum Erzeugen der Drosseleinrichtung durch mechanisches Einwirken auf die Abzweigungsleitung erzeugt wurde, vorzugsweise durch Einwirken von außen auf die Abzweigungsleitung. Ein entsprechender Prozess ist besonders einfach und damit kostengünstig realisierbar.

Eine andere Weiterbildung des erfindungsgemäßen Fluidverteilungssystems sieht vor, dass die Verformung eine Querschnittsveränderung, insbesondere Querschnittsverengung, beinhaltet. Hierdurch wird eine besonders einfache Möglichkeit bereitgestellt, die beabsichtigte Drosselwirkung zu erzielen und an eine gegebene Anforderung anzupassen.

Im Zuge wieder einer anderen Weiterbildung des erfindungsgemäßen Fluidverteilungssystems kann außerdem vorgesehen sein, dass die Verformung wenigstens eine maximale Verformungstiefe, insbesondere Eindrücktiefe, und eine Verformungslänge, insbesondere Eindrücklänge, umfasst. Über die Verformungstiefe und/oder die Verformungslänge lässt sich ein gewünschter Druckverlust in der betreffenden Abzweigungsleitung gut und einfach einstellen.

Noch eine andere Weiterbildung des erfindungsgemäßen Fluidverteilungssystems sieht vor, dass eine Mehrzahl von Abzweigungsleitungen, vorzugsweise alle Abzweigungsleitungen, mit Ausnahme der jeweiligen Verformung identisch ausgebildet sind, insbesondere hinsichtlich ihres jeweiligen Querschnitts. Auf diese Weise gestaltet sich die Herstellung des Fluidverteilungssystems besonders einfach, weil für die Abzweigungsleitungen lauter Gleichteile verwendet werden können. Die Anpassung an eine bestimmte Anwendung oder Anforderung erfolgt lediglich durch die Individualisierung der jeweiligen Verformungen.

Wieder eine andere Weiterbildung des erfindungsgemäßen Fluidverteilungssystems sieht vor, dass die Verformung der betreffenden Abzweigungsleitung an jeder Abzweigungsleitung individualisiert ausgeführt ist, z.B. hinsichtlich Länge, Tiefe und/oder Querschnitt, um einen Massenstrom eines an die jeweilige Abzweigungsleitung angeschlossenen oder anzuschließenden Verbrauchers zu steuern.

Es hat sie als besonders vorteilhaft erwiesen, wenn bei entsprechender Weiterbildung des erfindungsgemäßen Fluidverteilungssystems die Verformung in einem Querschnitt durch die betreffende Abzweigungsleitung punktsymmetrisch bezüglich eines Mittelpunkts der Abzweigungsleitung, insbesondere sternförmig mit einer Sternform, ausgebildet ist. Eine solche Ausgestaltung hat sich insbesondere im Hinblick auf die mechanische Widerstandsfähigkeit des Fluidverteilungssystems als günstig erwiesen.

Besonders vorteilhaft ist es in diesem Zusammenhang, wenn bei einer entsprechenden Weiterbildung des erfindungsgemäßen Fluidverteilungssystems bei einer sternförmigen Ausgestaltung der Abzweigungsleitung die Sternform mindestens drei Spitzen aufweist, vorzugsweise vier Spitzen.

In der Praxis als besonders günstig hat sich eine Ausgestaltung des erfindungsgemäßen Fluidverteilungssystems erwiesen, bei dem die Spitzen über einen Umfang der Abzweigungsleitung symmetrisch angeordnet sind.

Um die Einsetzbarkeit des erfindungsgemäßen Fluidverteilungssystems weiter zu verbessern, kann bei einer entsprechenden Weiterbildung noch vorgesehen sein, dass die Abzweigungsleitung zwischen der Hauptverteilungsleitung und einem von der Hauptverteilungsleitung abgehenden, vorzugsweise zumindest teilweise gewellten Leitungselement angeordnet ist. Die Abzweigungsleitung dient dann im Wesentlichen "nur" zum Ausbilden der Drosseleinrichtung und zum Anschließen des genannten Leitungselements an die Hauptverteilungsleitung. Wenn das Leitungselement zumindest teilweise gewellt ausgebildet ist, insbesondere nach Art eines (Ring-)Wellschlauchs oder eines Balgs, lassen sich insbesondere Fertigungs- und durch Temperatur induzierte Toleranzen sowie Schwingungen im Betrieb einfach ausgleichen bzw. aufnehmen.

Die Abzweigungsleitung kann bei einer wieder anderen Weiterbildung des erfindungsgemäßen Fluidverteilungssystems mit ihrem einen Ende in einen Durchbruch oder in eine Aushalsung in der Hauptverteilungsleitung eingesteckt sein, und das Leitungselement kann in ein anderes Ende der Abzweigungsleitung eingesteckt sein. Auf diese Weise ergibt sich ein besonders einfacher und prozesssicherer Aufbau des Fluidverteilungssystems.

Im Zuge einer Weiterbildung des erfindungsgemäßen Verfahrens kann - wie bereits angemerkt wurde - vorgesehen sein, dass das Verformen, d.h. das lokale Verformen der Abzweigungsleitung zwecks Ausbildung der Drosseleinrichtung durch mechanisches Eindrücken der Abzweigungsleitung von außen erfolgt, vorzugsweise mittels eines geeigneten Eindrückwerkzeugs, höchst vorzugsweise bei gleichzeitiger Abstützung der Abzweigungsleitung von innen. Ein solches Vorgehen ist besonders einfach und kostengünstig.

Auch im Zuge einer Weiterbildung des erfindungsgemäßen Verfahrens kann vorgesehen sein, dass zur Herstellung des Fluidverteilungssystems mehrere Abzweigungsleitungen verwendet werden, die vor dem Verformen im Wesentlichen identisch ausgebildet sind oder waren, insbesondere hinsichtlich ihres jeweiligen Querschnitts. Auf die entsprechenden Vorteile wurde bereits hingewiesen.

Eine andere mögliche Weiterbildung des erfindungsgemäßen Verfahrens sieht vor, dass die Abzweigungsleitung bereits vor einem Verbinden mit der Hauptverteilungsleitung verformt wird, um die Drosseleinrichtung herzustellen.

Besonders vorteilhaft gestaltet sich das erfindungsgemäße Verfahren bei entsprechender Weiterbildung jedoch dann, wenn die Abzweigungsleitung erst nach einem Verbinden mit der Hauptverteilungsleitung verformt wird. Das Fluidverteilungssystem kann dann vorkonfektioniert werden, und wird erst vor Ort hinsichtlich der gewünschten Druckverluste angepasst.

Ebenfalls als besonders vorteilhaft hat es sich erwiesen, wenn in Weiterbildung des erfindungsgemäßen Verfahrens vor dem Verformen noch ein weiteres Leitungselement, vorzugsweise ein zumindest teilweise gewelltes Leitungselement, insbesondere ein (Ring-)Wellschlauch oder Balg, in ein freies Ende der Abzweigungsleitung eingesteckt und vorzugsweise stoffschlüssig an der Abzweigungsleitung befestigt wird, beispielsweise durch Verschweißen, Verkleben oder Verlöten.

Ganz besonders vorteilhaft gestaltet sich das erfindungsgemäße Verfahren bei entsprechender Weiterbildung auch dann, wenn das Verformen der betreffenden Abzweigungsleitung an jeder Abzweigungsleitung individualisiert in der Ausprägung ausgeführt wird, z.B. hinsichtlich Tiefe, Länge und/oder Art der Verformung, um einen Massenstrom eines an die jeweilige Abzweigungsleitung angeschlossenen Verbrauchers zu steuern.

Im Zuge der vorliegenden Erfindung lassen sich insbesondere die nachfolgend aufgelisteten Vorteile realisieren, die sich in einer vereinfachten und damit kostengünstigeren Herstellung äußern: Gleichteileverwendung (insbesondere für die Abzweigungsleitungen), Individualisierung der Drosseleinrichtungen erst nach Montage und Fügeprozess, keine Verwechslungsgefahr, keine separaten Bauteile.

Außerdem ist es möglich, den Prozess zur Herstellung der Drosseleinrichtungen in einer sogenannten (Prozess-)Nebenzeit auszuführen, beispielsweise parallel zu einem Richten nach dem Löten, wenn beispielsweise die Abzweigungsleitungen und/oder die genannten weiteren Leitungselemente durch einen Lötprozess miteinander bzw. mit der Hauptverteilungsleitung verbunden werden.

Weitere Eigenschaften und Vorteile der Erfindung ergeben sich aus der nachfolgenden Beschreibung von Ausführungsbeispielen anhand der Zeichnung.
- Figur 1: zeigt eine schematische Gesamtdarstellung eines vorbekannten Fluidverteilungssystems;
- Figur 2: zeigt schematisch eine erfindungsgemäße Herstellung einer Drosseleinrichtung für ein Fluidverteilungssystem, insbesondere analog Figur 1.
- Figur 3: zeigt im Detail eine Ausgestaltung eines erfindungsgemäßen Fluidverteilungssystems.

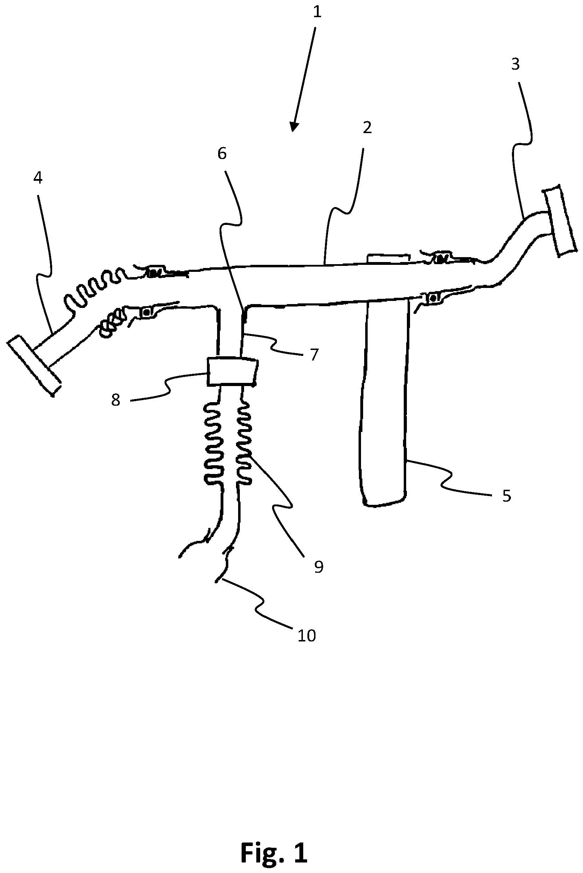

In Figur 1 ist eine schematische Gesamtdarstellung eines vorbekannten Fluidverteilungssystems gezeigt. Allerdings entspricht das vorbekannte Fluidverteilungssystem - mit Ausnahme der noch zu beschreibenden Drosseleinrichtung - einem erfindungsgemäßen Fluidverteilungssystem.

Das Fluidverteilungssystem ist in Figur 1 insgesamt mit dem Bezugszeichen 1 bezeichnet. Es umfasst bei Bezugszeichen 2 eine sogenannten Mainpipe, die eine Hauptverteilungsleitung des Fluidverteilungssystems 1 darstellt. Endständig sind an die Mainpipe bzw. Hauptverteilungsleitung 2 bestimmte Anschlussstücke 3, 4 angeschlossen, die zum Verbinden der Mainpipe bzw. Hauptverteilungsleitung 2 mit weiteren (Leitungs-)Elementen dienen, was in Figur 1 nicht weiter dargestellt ist. Bezugszeichen 5 bezeichnet ein Halteelement zum Halten oder Befestigen des Fluidverteilungssystems 1, insbesondere der Mainpipe oder Hauptverteilungsleitung 2.

Bei Bezugszeichen 6 weist die Mainpipe bzw. Hauptverteilungsleitung 2 eine Aushalsung auf, in die eine Abzweigungsleitung 7 eingesteckt ist. Die Abzweigungsleitung 7 kann mit der Hauptverteilungsleitung 2 insbesondere stoffschlüssig verbunden sein, beispielsweise verlötet. Bezugszeichen 8 bezeichnet eine separate Drosseleinrichtung, die an der Abzweigungsleitung 7 angeordnet ist, um den Durchfluss eines Fluids, beispielsweise einer Kühlflüssigkeit, zu steuern. An die Drosseleinrichtung 8 schließt sich ein weiteres Leitungselement 9 an, das vorliegend als Balg ausgebildet ist. Das weitere Leitungselement 9 ist andererseits mit einem weiteren Element 10 verbunden, bei dem es sich beispielsweise um ein Verbindungsteil zum Anschließen der Abzweigungsleitung 7 bzw. des weiteren Leitungselements 9 an ein zu temperierendes Batteriemodul eines elektrisch angetriebenen Kraftfahrzeugs handeln kann, um beispielsweise das Batteriemodul mit Kühlflüssigkeit zu versorgen.

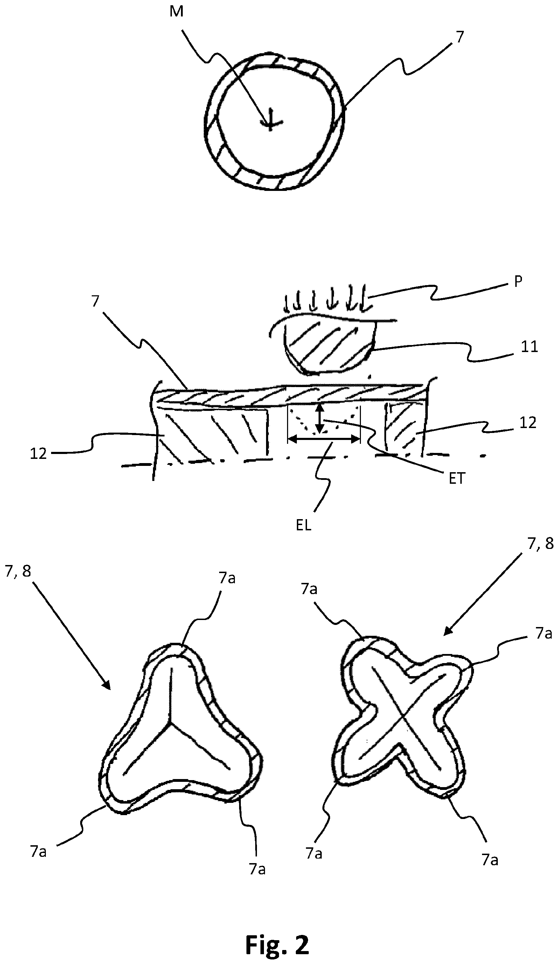

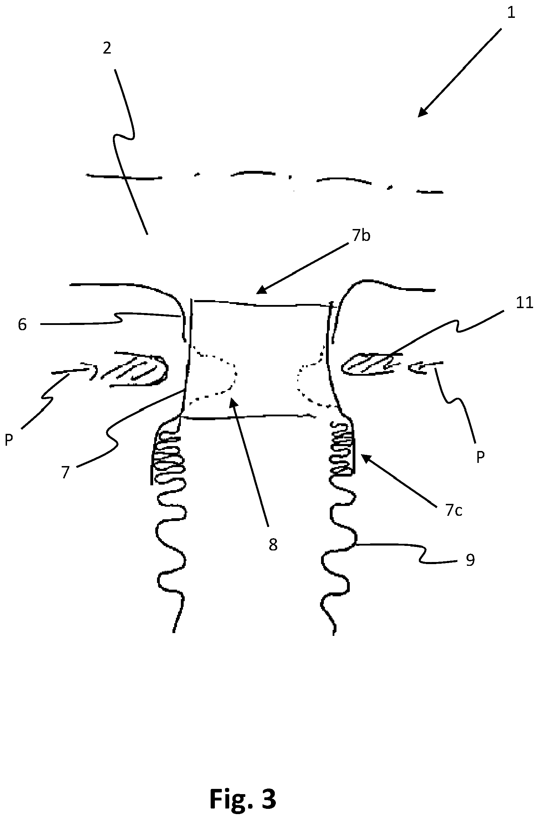

Wie bereits im einleitenden Teil der Beschreibung erwähnt, hatte es sich als nachteilig herausgestellt, wenn die Drosseleinrichtung 8 als ein separates Bauteil ausgebildet ist. Hier schafft die vorliegende Erfindung Abhilfe, wie nachfolgend anhand der Figuren 2 und 3 exemplarisch genauer dargestellt wird.

Figur 2 illustriert, wie bei einem Rohrleitungselement, bei dem es sich insbesondere um die Abzweigungsleitung 7 gemäß Figur 1 handeln kann, eine Drossel oder Drosseleinrichtung 8 durch lokales Verformen mittels Druckeinwirkung von außen hergestellt wird.

Ganz oben in Figur 2 ist die Abzweigungsleitung 7 bzw. das genannte Rohrleitungselement im Querschnitt dargestellt, bevor die Drossel oder Drosseleinrichtung hergestellt wurde. Entsprechend besitzt die Abzweigungsleitung 7 bzw. das genannte Rohrleitungselement im unverformten Zustand vorzugsweise einen kreisrunden Querschnitt.

In der Mitte von Figur 2 ist in einem Längsschnitt dargestellt, wie mittels eines geeigneten Eindrückwerkzeugs 11 in Richtung der Pfeile P von außen auf die Abzweigungsleitung 7 bzw. das genannte Rohrleitungselement eingewirkt wird, um dieses lokal zu verformen und die Drossel oder Drosseleinrichtung herzustellen. Bezugszeichen ET bezeichnet die (maximale) Eindrücktiefe, und Bezugszeichen EL bezeichnet die Eindrücklänge. Bezugszeichen 12 bezeichnet ein Gegenwerkzeug zum Stützen der Abzweigungsleitung 7 bzw. des genannten Rohrleitungselements während der Verformung.

Wie der Darstellung unten in Figur 2 zu entnehmen ist, ist das Eindrückwerkzeug 11 vorzugsweise derart ausgebildet, dass es bezüglich eines Mittelpunkts M der Abzweigungsleitung 7 bzw. des genannten Rohrleitungselements über deren/dessen Umfang verteilt symmetrisch auf die Abzweigungsleitung 7 bzw. das genannte Rohrleitungselement einwirkt. Bei entsprechender Ausgestaltung des Eindrückwerkzeugs 11 lassen sich so insbesondere die gezeigten Sternformen im Bereich der lokalen Verformung der Abzweigungsleitung 7 bzw. des genannten Rohrleitungselements realisieren, wobei die linke Sternform (Y) drei Spitzen 7a und die (alternative) rechte Sternform (X) vier Spitzen 7a aufweist. Vorzugsweise sind die Spitzen 7a jeweils gleichmäßig über den Umfang der Abzweigungsleitung 7 bzw. des genannten Rohrleitungselements verteilt ausgebildet bzw. angeordnet. Dadurch entsteht in dem Umformbereich die Drosseleinrichtung 8 (vgl. Figuren 1 und 3).

Die Figur 3 zeigt einen Schnitt durch ein erfindungsgemäßes Fluidverteilungssystem 1, wobei gleiche Bezugszeichen dieselben oder zumindest gleich wirkende Elemente bezeichnen wie in den Figuren 1 und 2.

Die hier relativ kurze Abzweigungsleitung 7 ist mit ihrem einen Ende 7b im Bereich der Aushalsung 6 in die Mainpipe bzw. Hauptverteilungsleitung 2 eingesteckt und dort vorzugsweise stoffschlüssig festgelegt. An ihrem anderen Ende 7c weist die Abzweigungsleitung 7 eine Aufweitung auf, in die ein weiteres Leitungselement 9 in Form eines Wellschlauchs eingesteckt ist. Der Wellschlauch kann insbesondere durch Verpressen mit der Abzweigungsleitung 7 kraftschlüssig verbunden sein. Zusätzlich oder alternativ kommt auch hier eine stoffschlüssige Verbindung in Betracht.

Vorzugsweise wird bei einem entsprechend vorkonfektionierten Fluidverteilungssystem 1 als zunächst letzter Schritt der Fertigung die bereits mehrfach erwähnte Drosseleinrichtung 8 durch lokales Verformen der Abzweigungsleitung 7 ausgebildet. Zu diesem Zweck kommt wiederum vorzugsweise ein geeignetes Eindrückwerkzeug 11 zum Einsatz, das gemäß den Pfeilen P umfänglich von au-ßen auf die Abzweigungsleitung 7 einwirkt, sodass sich die in Figur 3 gestrichelt eingezeichnete Kontur ergibt, welche die Drosseleinrichtung 8 bildet.

Wenn das Fluidverteilungssystem 1 weitere Aushalsungen 6 (in Figur 3 nicht gezeigt) aufweist, kann dort entsprechend verfahren werden. Auf diese Weise lassen sich die Drosseleinrichtungen 8 individuell ausgestalten und anpassen.

## Patentansprüche

1. Fluidverteilungssystem (1) mit einer Hauptverteilungsleitung (2) und einer Anzahl von Abzweigungsleitungen (7), welche Abzweigungsleitungen (7) jeweils von der Hauptleitung (2) abgezweigt sind, bei dem in wenigstens einer Abzweigungsleitung (7) eine Drosseleinrichtung (8) angeordnet ist, **dadurch gekennzeichnet, dass**
die Drosseleinrichtung (8) durch mindestens eine lokale Verformung der betreffenden Abzweigungsleitung (7) ausgebildet ist.

2. Fluidverteilungssystem (1) nach Anspruch 1,
**dadurch gekennzeichnet, dass** die Verformung durch mechanisches Einwirken auf die Abzweigungsleitung (7) erzeugt wurde, vorzugsweise durch Einwirken von außen auf die Abzweigungsleitung (7).

3. Fluidverteilungssystem (1) nach Anspruch 1 oder 2,
**dadurch gekennzeichnet, dass** die Verformung eine Querschnittsveränderung, insbesondere Querschnittsverengung, beinhaltet.

4. Fluidverteilungssystem (1) nach einem der Ansprüche 1 bis 3,
**dadurch gekennzeichnet, dass** die Verformung wenigstens eine maximale Verformungstiefe, insbesondere Eindrücktiefe (ET), und eine Verformungslänge, insbesondere Eindrücklänge (EL), umfasst.

5. Fluidverteilungssystem (1) nach einem der Ansprüche 1 bis 4,
**dadurch gekennzeichnet, dass** eine Mehrzahl von Abzweigungsleitungen (7), vorzugsweise alle Abzweigungsleitungen (7), mit Ausnahme der jeweiligen Verformung identisch ausgebildet sind, insbesondere hinsichtlich ihres jeweiligen Querschnitts.

6. Fluidverteilungssystem (1) nach einem der Ansprüche 1 bis 5,
**dadurch gekennzeichnet, dass** die Verformung der betreffenden Abzweigungsleitung (7) an jeder Abzweigungsleitung (7) individualisiert ausgeführt ist, um einen Massenstrom eines an die jeweilige Abzweigungsleitung (7) angeschlossenen oder anzuschließenden Verbrauchers zu steuern.

7. Fluidverteilungssystem (1) nach einem der Ansprüche 1 bis 6,
**dadurch gekennzeichnet, dass** die Verformung in einem Querschnitt durch die Abzweigungsleitung (7) punktsymmetrisch bezüglich eines Mittelpunkts (M) der Abzweigungsleitung (7), insbesondere sternförmig mit einer Sternform, ausgebildet ist.

8. Fluidverteilungssystem (1) nach Anspruch 7,
**dadurch gekennzeichnet, dass** bei einer sternförmigen Ausgestaltung der Abzweigungsleitung (7) die Sternform mindestens drei Spitzen (7a) aufweist, vorzugsweise vier Spitzen (7a), wobei vorzugsweise die Spitzen (7a) über einen Umfang der Abzweigungsleitung (7) symmetrisch angeordnet sind.

9. Fluidverteilungssystem (1) nach einem der Ansprüche 1 bis 8,
**dadurch gekennzeichnet, dass** die Abzweigungsleitung (7) zwischen der Hauptverteilungsleitung (2) und einem von der Hauptverteilungsleitung (2) abgehenden, vorzugsweise zumindest teilweise gewellten Leitungselement (9) angeordnet ist.

10. Fluidverteilungssystem (1) nach einem der Ansprüche 1 bis 9,
**dadurch gekennzeichnet, dass** die Abzweigungsleitung (7) mit ihrem einen Ende (7b) in einen Durchbruch oder in eine Aushalsung (6) in der Hauptverteilungsleitung (2) eingesteckt ist, und dass das Leitungselement (9) in ein anderes Ende (7c) der Abzweigungsleitung (7) eingesteckt ist.

11. Verfahren zur Herstellung eines Fluidverteilungssystems (1) aus einer Hauptverteilungsleitung (2) und einer Anzahl von Abzweigungsleitungen (7), welche Abzweigungsleitungen (7) jeweils von der Hauptleitung (2) abzweigen, insbesondere des Fluidverteilungssystems (1) nach einem der vorangehenden Ansprüche,
**dadurch gekennzeichnet, dass**
in wenigstens einer Abzweigungsleitung (7) eine Drosseleinrichtung (8) durch mindestens ein lokales Verformen der betreffenden Abzweigungsleitung (7) ausgebildet wird.

12. Verfahren nach Anspruch 11,
**dadurch gekennzeichnet, dass** das Verformen durch mechanisches Eindrücken der Abzweigungsleitung (7) von außen erfolgt, vorzugsweise mittels eines geeigneten Eindrückwerkzeugs (11), höchst vorzugsweise bei gleichzeitiger Abstützung der Abzweigungsleitung (7) von innen.

13. Verfahren nach Anspruch 11 oder 12,
**dadurch gekennzeichnet, dass** mehrere Abzweigungsleitungen (7) verwendet werden, die vor dem Verformen im Wesentlichen identisch ausgebildet sind oder waren, insbesondere hinsichtlich ihres jeweiligen Querschnitts.

14. Verfahren nach einem der Ansprüche 11 bis 13,
**dadurch gekennzeichnet, dass** vor dem Verformen ein weiteres Leitungselement (9), vorzugsweise ein zumindest teilweise gewelltes Leitungselement, in ein freies Ende (7c) der Abzweigungsleitung (7) eingesteckt wird.

15. Verfahren nach einem der Ansprüche 11 bis 14,
**dadurch gekennzeichnet, dass**
das Verformen der betreffenden Abzweigungsleitung (7) an jeder Abzweigungsleitung (7) individualisiert in der Ausprägung ausgeführt wird, um einen Massenstrom eines an die jeweilige Abzweigungsleitung (7) angeschlossenen Verbrauchers zu steuern.
